# EUROPEAN PATENT APPLICATION

(11) **EP 4 550 356 A1**
(43) Date of publication of application: **07.05.2025**
(21) Application number: 23830802.7
(22) Date of filing: 19.04.2023
(51) Int. Cl.: G21C 15/00, G21C 15/02, G21C 15/16

(54) **STEAM DRYER FOR BOILING WATER-TYPE REACTOR**

(30) Priority: 29.06.2022 JP 2022104394
(71) Applicant: HITACHI-GE NUCLEAR ENERGY, LTD., Hitachi-shi Ibaraki 317-0073 (JP)
(72) Inventor: AMANO, Masamichi, Hitachi-shi, Ibaraki 317-0073 (JP); KUROITA, Sho, Hitachi-shi, Ibaraki 317-0073 (JP); UCHIYAMA, Koji, Hitachi-shi, Ibaraki 317-0073 (JP)
(74) Representative: MERH-IP Matias Erny Reichl Hoffmann Patentanwälte PartG mbB
(86) International application number: PCT/JP2023/015655
(87) International publication number: WO 2024/004349

(57) **Abstract**

In order to ensure the structural integrity of a hood against a load such as pressure exerted from the outside of the hood, the present invention provides a steam dryer for a boiling water-type light-water reactor which ensures the stiffness of the hood without making the hood plate itself thicker, and which avoids lengthening the fabrication time or complicating the fabrication procedure. This steam dryer for a boiling water-type reactor comprises: a hood for guiding, to a steam dryer unit, steam separated by a gas-water separator installed above a reactor core made of a plurality of fuel assemblies disposed inside a nuclear reactor pressure vessel; a support ring; a skirt; and the steam dryer unit having a corrugated plate therein, the steam dryer being characterized in that the hood is made of a first hood plate disposed in the vertical direction, a reinforcing plate mounted on the first hood plate, a second hood plate disposed vertically above the first hood plate and the reinforcing plate, and a side plate disposed between the first hood plate and the steam dryer unit, and the reinforcing plate is formed such that the cross-section thereof is a concavo-convex shape.

## Description

### Technical Field

The present invention relates to a steam dryer for boiling water-type reactor, and more specifically, to the one provided with a hood for guiding steam to a steam dryer unit, which has been separated by a gas-water separator installed above a reactor core made of a plurality of fuel assemblies disposed inside a nuclear reactor pressure vessel.

### Background Art

The boiling water-type reactor has a reactor core made of a plurality of fuel assemblies disposed inside a nuclear reactor pressure vessel. Steam is generated from a part of reactor-cooling water heated by a nuclear reaction in the reactor core. The gas-water separator installed above the reactor core separates a gas-liquid two-phase flow that contains reactor-cooling water and steam into the reactor-cooling water and the steam. The steam separated by the gas-water separator is guided to the steam dryer installed above the gas-water separator.

The steam dryer provided with a steam dryer unit having a corrugated plate therein removes water contained in the steam passing through the steam dryer unit. The steam dryer has a hood disposed at a position that faces the steam dryer unit so that the steam separated by the gas-water separator is guided to the steam dryer unit.

Patent Literature 1 discloses the steam dryer structured to have the hood as described above.

Patent Literature 1 discloses the steam dryer including a corrugated plate assembly having a plurality of corrugated plates for capturing droplets, which is attached to the spacer rod, the side plate to which the spacer rod is fixed, the unit support fixed to the lower part of the side plate, the top plate fixed to the upper part of the side plate, the hood support fixed to the side plate, the hood fixed to the hood support and the top plate, and the support plate which is disposed between the corrugated plates and fixed to the unit support and the top plate. The steam dryer is structured to hardly increase the diameter of the steam dryer and size of the nuclear reactor pressure vessel, have the lower increase rate of the workload compared with the workload that increases the number of manufacturing operators of the steam dryer unit, and improve rigidity of a part that bears the vibrational load.

### Citation List

### Patent Literature

Patent Literature: Japanese Unexamined Patent Application Publication No. 2007-17244

### Summary of Invention

### Technical Problem

The above-described hood is required to ensure structural integrity (to be unbreakable) against the load such as pressure exerted from the outside of the hood. Patent Literature 1 discloses that rigidity of the hood plate is improved to ensure the structural integrity. Thickening of the hood plate itself is conceivable to ensure further sufficient structural integrity against the load such as pressure exerted from the outside of the hood.

Thickening of the hood plate itself, however, increases the welding heat generated by welding for attachment of the hood plate. As a result, the welding heat causes large deformation of the part such as the hood plate constituting the steam dryer. It is necessary to perform an additional operation for correcting the deformation owing to the welding heat. It is therefore required to solve problems of lengthening of the fabrication time and complication of the fabrication procedure.

In light of the above-described circumstance, the first object of the present invention is to provide a steam dryer for boiling water-type reactor that ensures rigidity of the hood without thickening the hood plate itself to ensure the structural integrity of the hood against the load such as pressure exerted from the outside of the hood, and avoids lengthening of the fabrication time or complication of the fabrication procedure.

The second object of the present invention is to provide a steam dryer for boiling water-type reactor that has the hood structured to fend off the load of the fluid exerting from the outside of the hood to ensure structural integrity of the hood.

### Solution to Problem

The first object is attained by the steam dryer for boiling water-type reactor according to the present invention. The steam dryer for boiling water-type reactor includes a hood, a support ring, a skirt, and a steam dryer unit having a corrugated plate therein. The hood guides steam separated by a gas-water separator installed above a reactor core made of a plurality of fuel assemblies disposed inside a nuclear reactor pressure vessel to the steam dryer unit. The hood includes a first hood plate disposed in a vertical direction, a reinforcing plate to be attached to the first hood plate, a second hood plate vertically disposed on upper sides of the first hood plate and the reinforcing plate, and a side plate disposed between the first hood plate and the steam dryer unit. The reinforcing plate is formed in a concavo-convex shape having a rectangular or an arcuate cross section.

The first object is attained by the steam dryer for boiling water-type reactor according to the present invention. The steam dryer for boiling water-type reactor includes a hood, a support ring, a skirt, and a steam dryer unit having a corrugated plate therein. The hood guides steam separated by a gas-water separator installed above a reactor core made of a plurality of fuel assemblies disposed inside a nuclear reactor pressure vessel to the steam dryer unit. The hood includes a first hood plate having a plurality of divided sections to be vertically disposed stepwise to make the respective distances from the steam dryer unit wider from an upper to a lower side in the vertical direction, a second hood plate vertically disposed on an upper side of the first hood plate, a side plate disposed between the first hood plate and the steam dryer unit, and a reinforcing plate which is attached to the first hood plate, and extends vertically to the steam dryer unit.

The second object is attained by the steam dryer for boiling water-type reactor according to the present invention. The steam dryer for boiling water-type reactor includes a hood, a support ring, a skirt, and a steam dryer unit having a corrugated plate therein. The hood guides steam separated by a gas-water separator installed above a reactor core made of a plurality of fuel assemblies disposed inside a nuclear reactor pressure vessel to the steam dryer unit. The hood includes a first hood plate disposed in a vertical direction, and a second hood plate vertically disposed on an upper side of the first hood plate. The first hood plate is formed to have a triangular structure with a vertex in a direction orthogonal to a load exerted by a fluid, or an arcuate structure.

### Advantageous Effects of Invention

The present invention secures rigidity of the hood without thickening the hood plate itself to ensure the structural integrity of the hood against the load such as pressure exerted from the outside of the hood, and avoids lengthening of the fabrication time and complication of the fabrication procedure, or provides the hood structured to fend off the load of the fluid exerting from the outside of the hood to further ensure the structural integrity of the hood.

### Brief Description of Drawings

Fig. 1 is a view showing an overall structure of a boiling water-type reactor provided with a steam dryer for boiling water-type reactor according to the present invention.
Fig. 2 is a perspective view showing the steam dryer for boiling water-type reactor as a first embodiment according to the present invention.
Fig. 3 is a view seen from a direction of an arrow A shown in Fig. 2.
Fig. 4 is a sectional view taken along line B-B of Fig. 3.
Fig. 5 is a view corresponding to Fig. 4, showing a steam dryer for boiling water-type reactor as a modification of the first embodiment according to the present invention.
Fig. 6 is a view corresponding to Fig. 4, showing a steam dryer for boiling water-type reactor as a second embodiment according to the present invention.
Fig. 7 is a view corresponding to Fig. 3, showing a steam dryer for boiling water-type reactor as a third embodiment according to the present invention.
Fig. 8 is a partial sectional view seen from a direction of an arrow C of Fig. 7.
Fig. 9 is a view corresponding to Fig. 3, showing a steam dryer for boiling water-type reactor as a fourth embodiment according to the present invention.
Fig. 10 is a sectional view taken along line D-D of Fig. 9.
Fig. 11 is a view corresponding to Fig. 10, showing a steam dryer for boiling water-type reactor as a modification of the fourth embodiment according to the present invention.
Fig. 12 is a view corresponding to Fig. 10, showing a steam dryer for boiling water-type reactor as a modification of the fourth embodiment according to the present invention.
Fig. 13 is a view corresponding to Fig. 10, showing a steam dryer for boiling water-type reactor as a fifth embodiment according to the present invention.

### Description of Embodiments

An explanation is made with respect to the steam dryer for boiling water-type reactor according to the present invention based on illustrated embodiments. In explanations of the respective embodiments, the same components will be followed by the same reference signs.

The following explanations of the embodiments are mere examples with no intention of limiting the subject matter of the present invention to the specific embodiments as below.

### First Embodiment

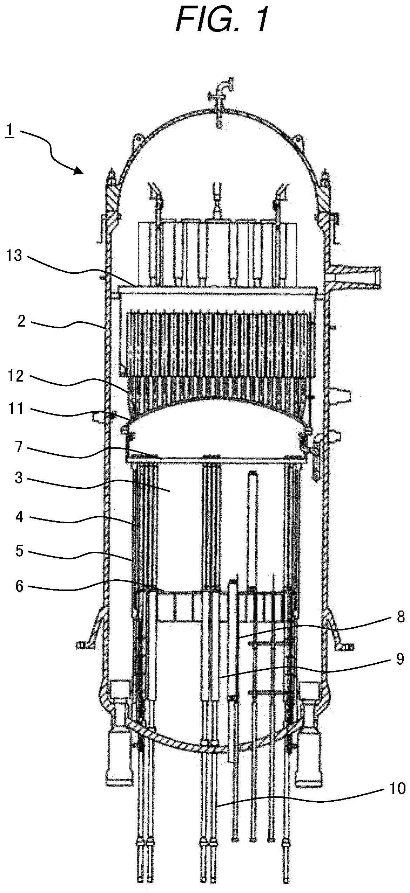

Fig. 1 is a view showing an overall structure of a boiling water-type reactor provided with a steam dryer for boiling water-type reactor according to the present invention.

As Fig. 1 shows, a boiling water-type reactor 1 is generally composed of at least a shroud head 11, an upper grating plate 7, a core shroud 5, a control rod guide tube 9, and a core support plate 6, which are disposed inside a reactor pressure vessel 2.

The core shroud 5 surrounds a reactor core 3 loaded with a plurality of fuel assemblies 4. The core support plate 6 is attached to the core shroud 5 at a lower end of the reactor core 3.

The upper grating plate 7 attached to the core shroud 5 is disposed on an upper end of the reactor core 3. The upper grating plate 7 supports each upper end of the respective fuel assemblies 4. A plurality of control rods 8 to be inserted and removed between the fuel assemblies 4 are connected to control rod drive mechanisms (not shown) installed inside the respective control rod drive mechanism housings 10.

A plurality of control rod guide tubes 9 are installed below the reactor core 3 inside the reactor pressure vessel 2. The control rod 8 pulled out from the reactor core 3 is guided into the control rod guide tube 9.

The shroud head 11 is attached to an upper end of the upper grating plate 7. A gas-water separator 12 is disposed on an upper side of the shroud head 11. A steam dryer 13 is disposed above the gas-water separator 12.

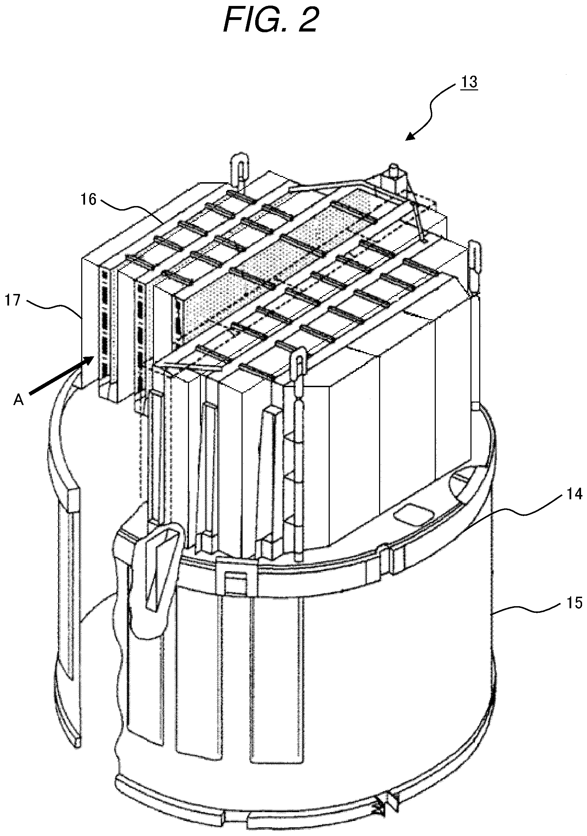

Fig. 2 is a perspective view showing a structure of the steam dryer 13 of the present embodiment, which is expressed by an isometrical drawing method.

As Fig. 2 shows, the steam dryer 13 of the present embodiment includes a support ring 14, a skirt 15, a steam dryer unit 16 having a corrugated plate (not shown) therein, and a hood 17. A plurality of steam dryer units 16 and a plurality of hoods 17 are disposed parallel to one another at the upper part of the steam dryer 13.

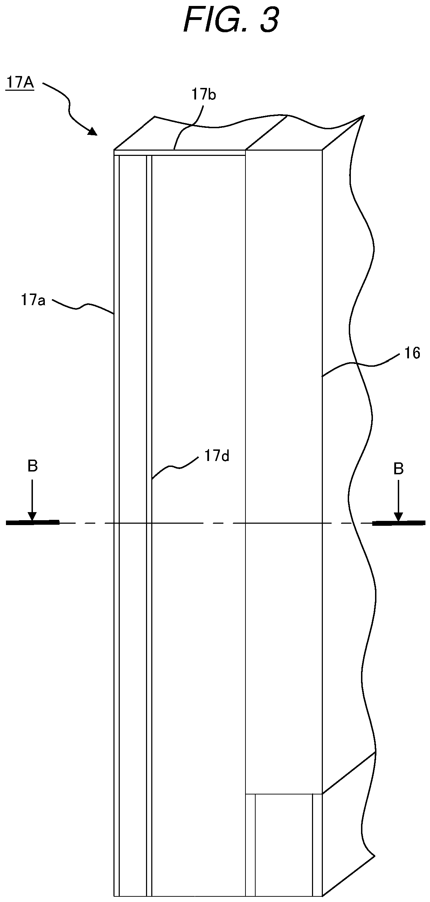

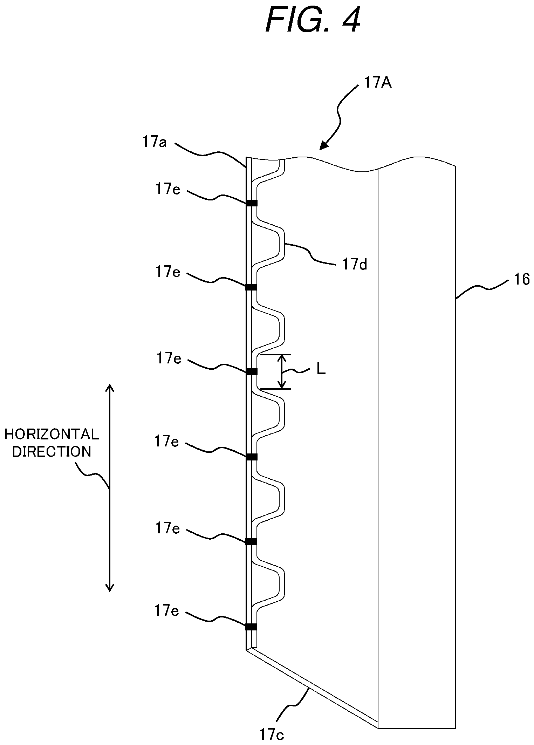

Referring to Figs. 3 and 4, an example of the hood 17 to be used for the steam dryer 13 of the present embodiment is described.

As Figs. 3 and 4 show, a hood 17A of the present embodiment is generally composed of a first hood plate 17a which is vertically disposed (in an up-down direction), a first reinforcing plate 17d attached to the first hood plate 17a, a second hood plate 17b which is disposed on each upper side of the first hood plate 17a and the first reinforcing plate 17d vertically thereto, and a side plate 17c disposed between the first hood plate 17a and the steam dryer unit 16.

As Fig. 4 shows, the first reinforcing plate 17d as described above is formed into a concavo-convex shape having a rectangular (trapezoidal) cross section, and is joined to the first hood plate 17a at a plurality of points each as a welded part 17e.

The hood 17A of the present embodiment is structured to have the first reinforcing plate 17d formed into the concavo-convex shape having the rectangular (trapezoidal) cross section joined to the first hood plate 17a. This improves rigidity of the first hood plate 17a to allow improvement in rigidity of the hood 17A without thickening the first hood plate 17a itself.

Rigidity of the hood 17A is improved without thickening the first hood plate 17a itself of the steam dryer 13 against the load such as pressure exerted from the outside of the hood 17A. This makes it possible to ensure structural integrity of the hood 17A of the steam dryer 13, and avoid lengthening of the fabrication time and complication of the fabrication procedure.

As Figs. 3 and 4 show, the hood 17A has the first hood plate 17a and the first reinforcing plate 17d joined to each other at the welded parts 17e. The first hood plate 17a and the first reinforcing plate 17d may be arbitrarily joined without being limited to the use of the welded parts 17e as shown in Fig. 4. It is possible to use fasteners of other type such as rivets and bolts.

Fig. 4 shows a representative example of the first reinforcing plate 17d which is structured to have the concavo-convex shape (rectangular (trapezoidal) cross section, and joined to the first hood plate 17a at a plurality of welded parts 17e). A horizontal length L of a joined part between the first hood plate 17a and the first reinforcing plate 17d is not limited to the one as shown in Fig. 4 (the up-down direction of Fig. 4 showing the cross section taken along line B-B of Fig. 3 corresponds to a horizontal direction; and "the horizontal length of the joined part between the first hood plate 17a and the first reinforcing plate 17d" denotes a horizontal distance of contact between the first hood plate 17a and the first reinforcing plate 17d, which are fixed at the single welded part 17e as shown in Fig. 4). It is clear that the horizontal length of the joined part between the first hood plate 17a and the first reinforcing plate 17d may be changed.

Fig. 4 shows the structure of the first reinforcing plate 17d as the representative example (structured to have the concavo-convex shape with the rectangular (trapezoidal) cross section). However, it is not limited to the one as shown in Fig. 4. The structure may be arbitrarily formed to have the polygonal concavo-convex shape.

The first reinforcing plate 17d of the hood 17A as shown in Figs. 3 and 4 is joined to the first hood plate 17a uniformly. The joined range, however, is not limited to the one as shown in Figs. 3 and 4. It is possible to divide the range vertically or horizontally, or to join the first reinforcing plate to a part of the first hood plate 17a.

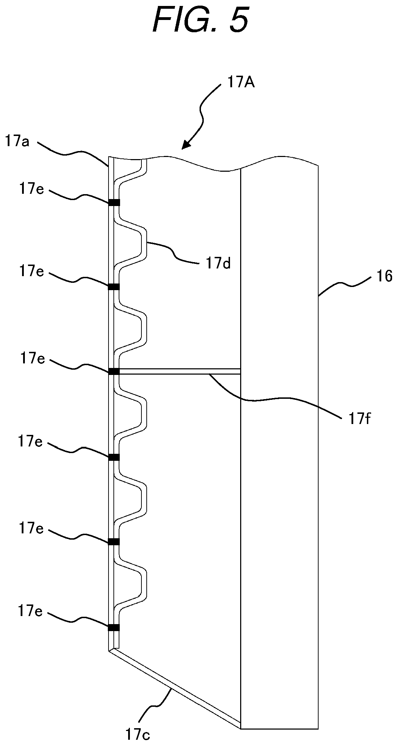

Fig. 5 shows a support 17f added to the structure of the hood 17A shown in Fig. 4, which extends vertically from the welded part 17e between the first reinforcing plate 17d and the first hood plate 17a to the steam dryer unit 16. This makes it possible to further improve rigidity of the first hood plate 17a. A structure for attaching the support 17f is not limited to the one as shown in Fig. 5.

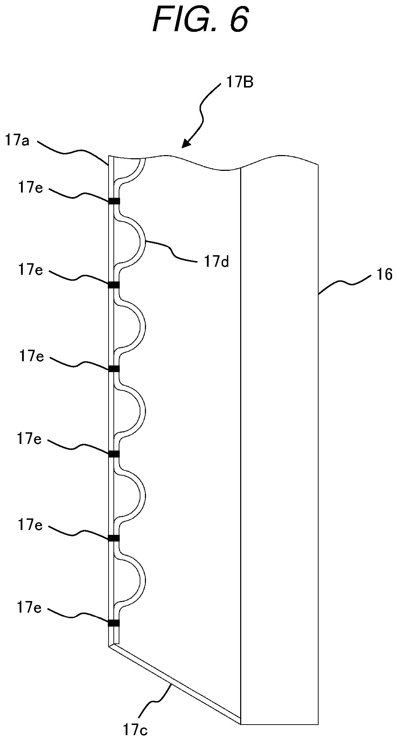

The hood having a structure different from that of the hood 17A may be formed to guide steam to the steam dryer unit 16 only by the adaptively fabricated first hood plate 17a to eliminate the first reinforcing plate 17d. Specifically, the structure of the first reinforcing plate 17d (concavo-convex shape having the rectangular or the arcuate cross section) as shown in Fig. 4 or 6 is applied to the first hood plate 17a itself. This provides the effect similar to the one derived from the above-described structure. Furthermore, the function of the first reinforcing plate 17d may be performed by the first hood plate 17a, making the first reinforcing plate 17d unnecessary.

### Second Embodiment

Fig. 6 shows another example of the hood 17 to be used for the steam dryer 13 of the present embodiment.

A hood 17B shown in Fig. 6 is different from the hood 17A of the first embodiment only in the structure of the first reinforcing plate 17d. A characteristic part of the hood 17B of the second embodiment will be described in detail. Overlapped explanations will be omitted.

Unlike the first reinforcing plate 17d having the rectangular cross section according to the first embodiment, the structure of the first reinforcing plate 17d of the hood 17B according to the second embodiment as shown in Fig. 6 is characterized by the concavo-convex shape having the arcuate cross section.

The structure of the hood 17B of the present embodiment allows improvement in rigidity of the hood 17 without thickening the first hood plate 17a themselves only by changing the structure of the first reinforcing plate 17d. This makes it possible to provide the effect similar to the one derived from the first embodiment.

Fig. 6 shows a representative example of the hood 17B according to the second embodiment, which has the first reinforcing plate 17d with the arcuate cross section. The arcuate cross section of the first reinforcing plate 17d is not limited to the one as shown in Fig. 6, but may be formed into an arbitrary concavo-convex shape having the arcuate cross section.

### Third Embodiment

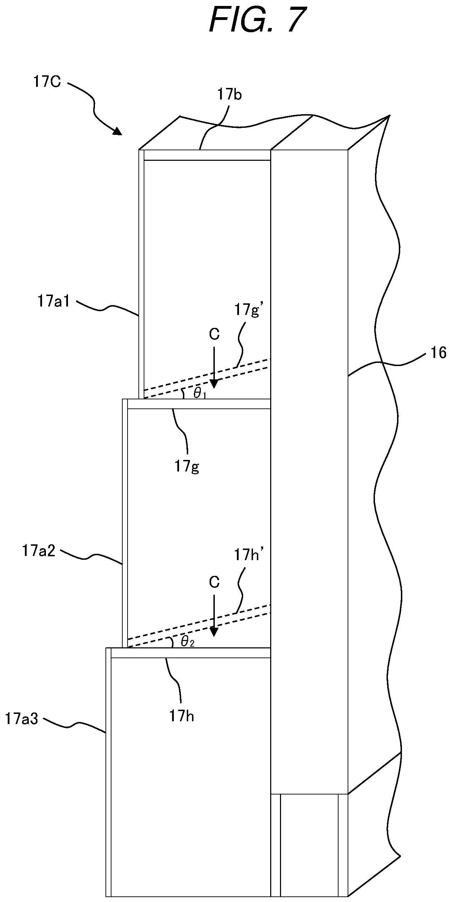

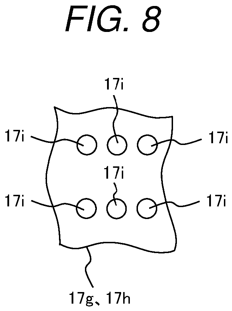

Referring to Figs. 7 and 8, a hood 17C to be used for the steam dryer 13 of the present embodiment is described.

The third embodiment shown in Figs. 7 and 8 is different from the hood 17A of the first embodiment only in the structure of the hood 17C. A characteristic part of the hood 17C of the third embodiment will be described in detail. Overlapped explanations will be omitted.

Referring to Figs. 7 and 8, a hood 17C of the present embodiment is formed by dividing the first hood plate 17a as described in the first and the second embodiments in the vertical direction (up-down direction) into a plurality of sections (in the present embodiment, a first divided hood plate 17a1, a second divided hood plate 17a2, and a third divided hood plate 17a3), and placing the first divided hood plate 17a1, the second divided hood plate 17a2, and the third divided hood plate 17a3 stepwise to make the respective distances from the steam dryer unit 16 larger in the order from the upper to the lower side of Fig. 7.

A second reinforcing plate 17g is attached to the first divided hood plate 17a1 and the second divided hood plate 17a2, intervening therebetween while extending vertically to the steam dryer unit 16. Meanwhile, a third reinforcing plate 17h is attached to the second divided hood plate 17a2 and the third divided hood plat 17a3, intervening therebetween while extending vertically to the steam dryer unit 16.

As Fig. 8 shows, each of the second reinforcing plate 17g and the third reinforcing plate 17h has a plurality of steam through holes 17i formed to allow passage of steam.

The hood 17C of the present embodiment allows improvement in rigidity of the hood 17C without thickening the first divided hood plate 17a1, the second divided hood plate 17a2, and the third divided hood plate 17a3 themselves. This makes it possible to provide the effect similar to the one derived from the first embodiment.

It is obvious that vertically attached positions of the second reinforcing plate 17g and the third reinforcing plate 17h, and the number thereof are not limited to those shown in Fig. 7.

It is obvious that each attachment angle of the second reinforcing plate 17g and the third reinforcing plate 17h is not limited to the angle as shown in Fig. 7 (as Fig. 7 shows, angles θ₁, θ₂ to be formed between the position of the vertically disposed the second reinforcing plate 17g and a reinforcing plate 17g' positioned by upwardly moving a part of the second reinforcing plate 17g at the side of the steam dryer unit 16, and between the position of the vertically disposed the third reinforcing plate 17h and a third reinforcing plate 17h' positioned by upwardly moving a part of the third reinforcing plate 17h at the side of the steam dryer unit 16).

It is obvious that a plurality of the steam through holes 17i configured to allow passage of steam are not limited to the configuration as shown in Fig. 8.

### Fourth Embodiment

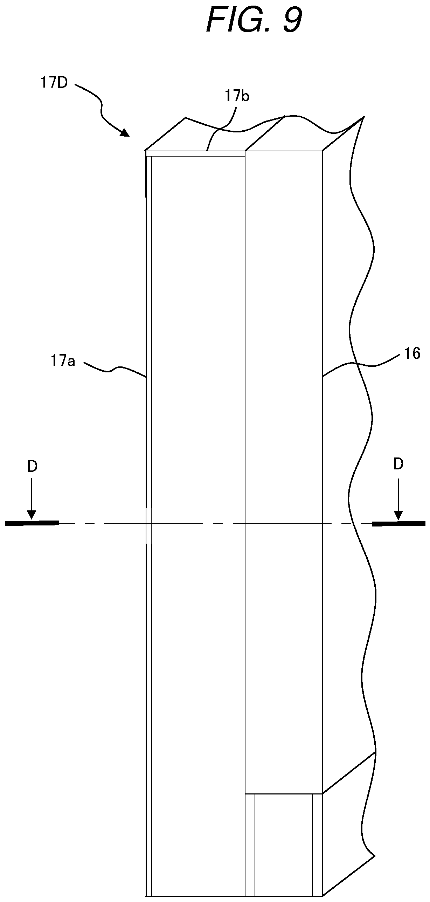

Referring to Figs. 9, 10, 11 and 12, the hood 17D to be used for the steam dryer 13 of the present embodiment is described.

The hood 17D in the fourth embodiment is different from the hood 17A of the first embodiment only in the structure of the hood 17D. A characteristic part of the hood 17D of the fourth embodiment will be described in detail. Overlapped explanations will be omitted.

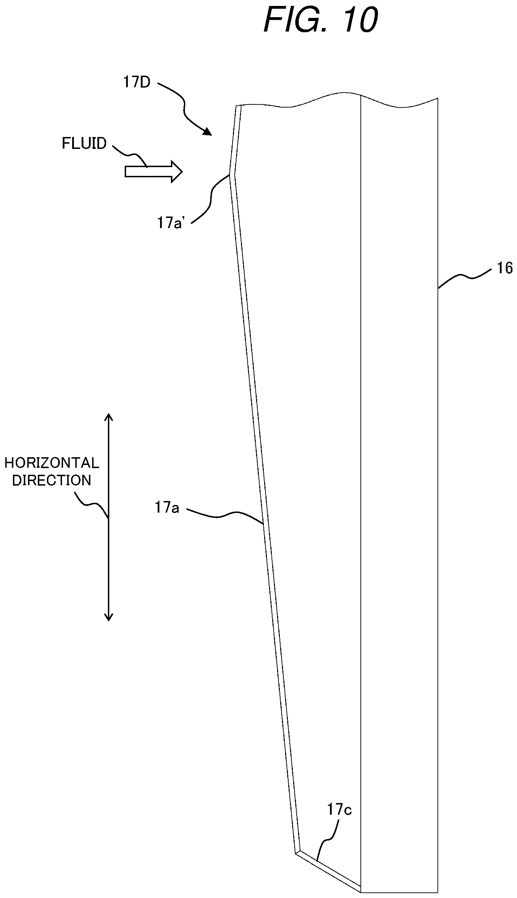

As Figs. 9 and 10 show, the hood 17D of the present embodiment includes the first hood plate 17a, the second hood plate 17b, and the side plate 17c.

The first hood plate 17a is formed into a triangular structure having a vertex 17a' directed orthogonally to the load exerted by the fluid. This structure fends off the load to the side plate 17c to ensure structural integrity of the hood 17D.

Specifically, if the fluid collides with the vertex 17a' of the triangular first hood plate 17a, the load can be fended off to the side plate 17c along the up-down direction. This ensures structural integrity of the hood 17D.

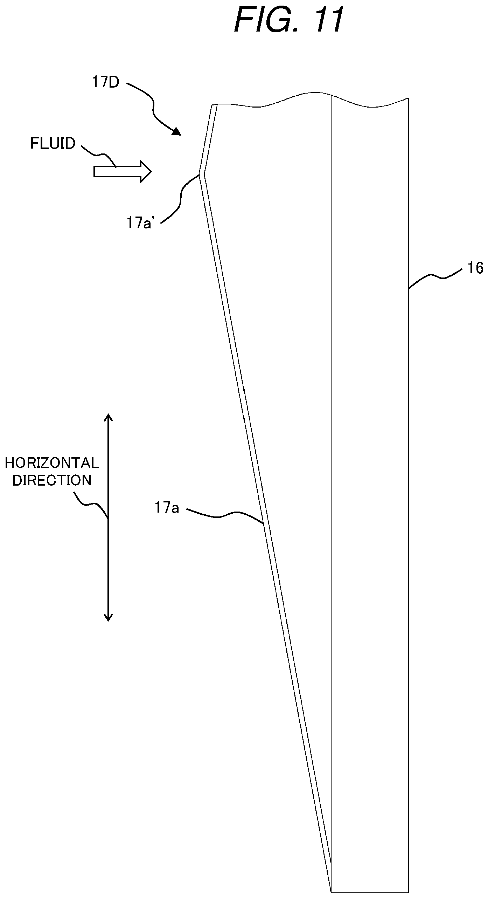

Referring to Fig. 11, the above-described first hood plate 17a is directly attached to the steam dryer unit 16 without using the side plate 17c intervening therebetween (the side plate 17c as shown in Fig. 10 is eliminated, and an end of the first hood plate 17a in the horizontal direction is directly attached to the steam dryer unit 16) so that the hood 17D is structured to fend off the load exerted by the fluid. This makes the side plate 17c unnecessary.

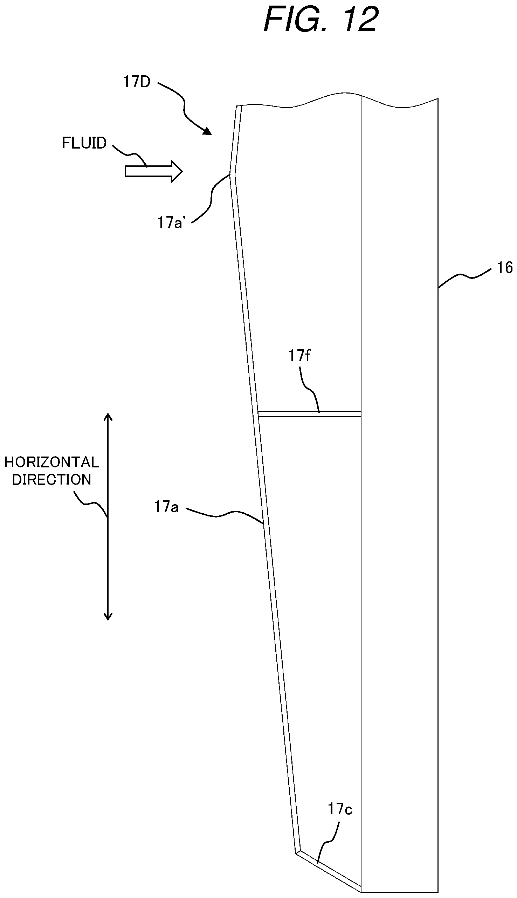

Referring to Fig. 12, a support 17f extending vertically to the side of the steam dryer unit 16 may be attached to the first hood plate 17a. The attached position of the support 17f, and the number thereof are not limited to those shown in Fig. 12.

### Fifth Embodiment

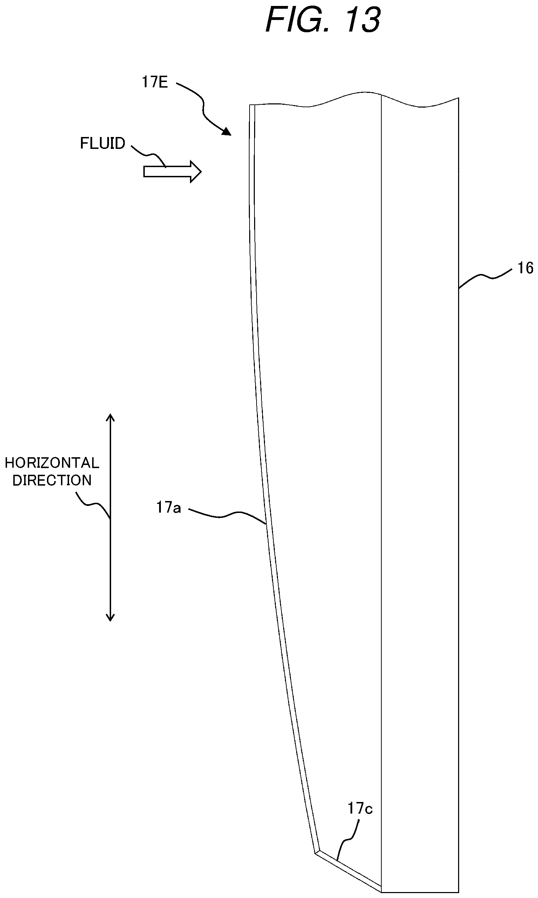

Referring to Fig. 13, a hood 17E to be used for the steam dryer 13 of the present embodiment is described.

The hood 17E shown in Fig. 13 of the fifth embodiment is different from the hood 17D of the fourth embodiment only in the structure of the first hood plate 17a. A characteristic part of the hood 17E of the fifth embodiment will be described in detail. Overlapped explanations will be omitted.

Compared with the first hood plate 17a of the hood 17D formed into the triangular structure having the vertex 17a' according to the fourth embodiment, the structure of the first hood plate 17a of the hood 17E according to the fifth embodiment is characterized in that the first hood plate 17a is formed into an arcuate structure.

Such structure allows the load exerted by the fluid to be fended off to the side plate 17c to ensure structural integrity of the hood 17E.

It should be noted that the present invention is not limited to the embodiments described above, and includes various modifications.

For example, the embodiments described above have been described in detail to simply describe the present invention, and are not necessarily required to include all the described configurations. In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

### Reference Signs List

1: boiling water-type reactor, 2: reactor pressure vessel, 3: reactor core, 4: fuel assembly, 5: core shroud, 6: core support plate, 7: upper grating plate, 8: control rod, 9: control rod guide tube, 10: control rod drive mechanism housing, 11: shroud head, 12: gas-water separator, 13: steam dryer, 14: support ring, 15: skirt, 16: steam dryer unit, 17A, 17B, 17C, 17D, 17E: hood, 17a: first hood plate, 17a1: first divided hood plate, 17a2: second divided hood plate, 17a3: third divided hood plate 17a': first hood plate of triangular structure, 17b: second hood plate, 17c: side plate, 17d: first reinforcing plate, 17e: welded part, 17f: support, 17g: second reinforcing plate, 17h: third reinforcing plate, 17i: steam through hole

## Claims

1. A steam dryer for boiling water-type reactor including a hood, a support ring, a skirt, and a steam dryer unit having a corrugated plate therein, the hood guiding steam separated by a gas-water separator installed above a reactor core made of a plurality of fuel assemblies disposed inside a nuclear reactor pressure vessel to the steam dryer unit, wherein:
the hood includes a first hood plate disposed in a vertical direction, a reinforcing plate to be attached to the first hood plate, a second hood plate vertically disposed on upper sides of the first hood plate and the reinforcing plate, and a side plate disposed between the first hood plate and the steam dryer unit; and
the reinforcing plate is formed to have a concavo-convex cross section.

2. The steam dryer for boiling water-type reactor according to claim 1,
wherein the concavo-convex cross section of the reinforcing plate is formed into a rectangular shape or an arcuate shape.

3. The steam dryer for boiling water-type reactor according to claim 1 or 2,
wherein a support vertically extending from the reinforcing plate to the steam dryer unit is disposed.

4. A steam dryer for boiling water-type reactor including a hood, a support ring, a skirt, and a steam dryer unit having a corrugated plate therein, the hood guiding steam separated by a gas-water separator installed above a reactor core made of a plurality of fuel assemblies disposed inside a nuclear reactor pressure vessel to the steam dryer unit,
wherein the hood includes a first hood plate having a plurality of divided sections to be vertically disposed stepwise to make respective distances from the steam dryer unit wider from an upper to a lower side in the vertical direction, a second hood plate vertically disposed on an upper side of the first hood plate, a side plate disposed between the first hood plate and the steam dryer unit, and a reinforcing plate having a plurality of steam through holes for allowing passage of steam, which is attached to the first hood plate, and extends vertically to the steam dryer unit.

5. A steam dryer for boiling water-type reactor including a hood, a support ring, a skirt, and a steam dryer unit having a corrugated plate therein, the hood guiding steam separated by a gas-water separator installed above a reactor core made of a plurality of fuel assemblies disposed inside a nuclear reactor pressure vessel to the steam dryer unit, wherein:
the hood includes a first hood plate disposed in a vertical direction, a second hood plate vertically disposed on an upper side of the first hood plate, and a side plate disposed between the first hood plate and the steam dryer unit; and
the first hood plate is formed into a concavo-convex shape having a rectangular cross section or an arcuate cross section.

6. A steam dryer for boiling water-type reactor including a hood, a support ring, a skirt, and a steam dryer unit having a corrugated plate therein, the hood guiding steam separated by a gas-water separator installed above a reactor core made of a plurality of fuel assemblies disposed inside a nuclear reactor pressure vessel to the steam dryer unit, wherein:
the hood includes a first hood plate disposed in a vertical direction, a second hood plate vertically disposed on an upper side of the first hood plate, and a side plate disposed between the first hood plate and the steam dryer unit; and
the first hood plate is formed to have a triangular structure with a vertex in a direction orthogonal to a load exerted by a fluid, or an arcuate structure.

7. The steam dryer for boiling water-type reactor according to claim 6,
wherein a support extending vertically to the steam dryer unit is attached to the first hood plate.

8. The steam dryer for boiling water-type reactor according to claim 6 or 7,
wherein an end of the first hood plate in a horizontal direction is directly attached to the steam dryer unit.
